(19) Europäisches Patentamt
European Patent Office
Office européen des brevets

(11) **EP 2 249 648 B1**

(12) **EUROPEAN PATENT SPECIFICATION**

(45) Date of publication and mention of the grant of the patent:
**30.03.2016 Bulletin 2016/13**

(51) Int Cl.:
*A01N 25/28* (2006.01)    *A01N 43/54* (2006.01)
*A01N 53/00* (2006.01)

(21) Application number: **08869550.7**

(22) Date of filing: **23.12.2008**

(86) International application number:
**PCT/EP2008/011093**

(87) International publication number:
**WO 2009/086914 (16.07.2009 Gazette 2009/29)**

(54) **A METHOD FOR MODULATING THE RELEASE RATE OF MICROENCAPSULATED ACTIVES**

VERFAHREN ZUM ANPASSEN DER FREISETZUNGSRATE MIKROVERKAPSELTER WIRKSTOFFEN

PROCEDE DE MODULATION DE LA VITESSE DE LIBERATION D'ACTIFS MICROENCAPSULES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **04.01.2008 IT MI20080010**

(43) Date of publication of application:
**17.11.2010 Bulletin 2010/46**

(73) Proprietor: **Endura S.p.A.**
**40121 Bologna (IT)**

(72) Inventors:
• **GOBBI, Carlotta**
**I-48100 Ravenna (IT)**
• **BASSETTI, Lucio**
**I-48100 Ravenna (IT)**

• **BORZATTA, Valerio**
**I-40127 Bologna (IT)**

(74) Representative: **Sama, Daniele**
**Sama Patents,**
**Via G.B. Morgagni, 2**
**20129 Milano (IT)**

(56) References cited:
**WO-A1-03/092378        WO-A1-2006/111553**
**WO-A1-2006/111839**

• **GIMENO, M.: "an overview of the latest development of microencapsulation for agricultural products", J.ENVIRON.SCI.HEALTH, vol. B31, no. 3, 1996, pages 407-420,**

EP 2 249 648 B1

**Description**

The present invention relates to a method for modulating the release rate of microencapsulated actives in agronomical field.

More specifically, the present invention relates to the use of piperonylbutoxide (PBO) in formulations comprising actives in agronomical field, in particular insecticides, acaricides, fungicides, snailicides, antihelminthics and herbicides, as modulator of the release rate of the active.

The resistance to actives in agronomical field such as insecticides, acaricides, fungicides, snailicides, antihelminthics and herbicides is requiring an increasing attention and makes it more and more difficult to control and eliminate harmful species (insects, acari, fungi, snails, warms, weeds). The resistance to actives is due to various defence mechanisms developed by the harmful species. One possible mechanism is the overproduction of enzymes, such as for example oxidase, esterase, capable to metabolize the actives (let their efficacy decreased). As a consequence, to eliminate the harmful species it is necessary either to increase the dosages, with consequent higher risks for the environment, or to develop novel actives.

It is known that the use of synergic substances, as for example piperonylbutoxide (PBO) can influence the insecticide-, acaricide-, fungicide-, snailicide-, anti-helminthic- and herbicide-activity in vitro and/or in vivo. This takes place, for example, through a mechanism of inhibition of the activity of some metabolic enzymes. See for example Gunning R.V. et al., "PiperonylButoxide", pages 215-225, Academic Press (1998); Benchaoui H.A. et al., J.Pharmacol. 1996,48, 753-759; Wen Z. et al., Pest. Science 1997, 49, 367-371; Zhao J.Z., J. Econ. Entomol. 2000, 93, 1508-1514; Nishiwaki H. et al., J. Pest. Science 2004, 29, 110-116, and patent applications EP 617,890, WO 2003/092,378.

It has been suggested to carry out a previous treatment with the synergic product at various times before treating the harmul species with the actives, in order to get the better synergic activities, especially in the presence of high resistance by harmful species to actives. In this way the actives can develop their full activity as the harmful species are already sensitized and with weakened self-defence properties. Therefore the active efficacy is maintained. However the above pre-treatment has drawbacks as the separated administrations are not very practical and further they are economically disadvantageous.

Microencapsulated formulations of insecticides, fungicides, snailicides, acaricides, antihelminthics, herbicides and their process of preparation are known in the prior art. See for example Gimeno M., J. Environ. Sci. Health, 1996, B31(3), 407-420; Finch C.A. in "Encapsulation and controlled release", special publication, Royal Society of Chemistry 1993, 138, I-12; patent applications e.g. EP 183,999, WO 03/051,116, US 2003/0119,675, EP 322,820. The microencapsulated active formulations are useful for the operator safety, but no subsequent modification of the active release is possible any more once the microcapsules have been prepared. For changing the active release from the microcapsules, it is necessary to modify the characteristics of the microcapsules as thickness, porosity and size. This requires to modify the process of preparation of the microcapsules. This means that it is necessary to have available various microencapsulated formulations for obtaining different active release times. The drawback is that they are more expensive.

Some microencapsulated actives in association with synergic agents are described, for example, in patent application WO 2006/111,553. The formulations comprise (A) a microencapsulated component having insecticide-, acaricide-, fungicide-, snailicide- or antihelminthic-activity and (B) a component having synergic activity towards (A). In these formulations the average release time $[t_A]$ of component (A) is delayed of a time $\Delta t = [t_A]-[t_B]$, of about 1 to 12 hours, with respect to the average release time $[t_B]$ of component (B). These formulations have an improved active efficacy with respect to the contemporaneous administration of the two components. This document does not describe how to change the active release rate from the microcapsule once the formulation has been prepared.

It was felt need to have available microcapsules having different release times of the active ingredient being the inhibition of the enzymes by the synergic agents different for the specific application and/or species to be treated. For example, for insecticide applications, the maximum inhibition time for the *Bemisia tabaci* esterases is about 10 hours, while for the *Helicoverpa armigera* is about 4 hours. Therefore two formulations having different release times are necessary for obtaining the highest efficacy on the various insects. These formulations are disadvantageous in industrial pratice. Formulations wherein the active release rate is modulatable, depending on the application and/or the species to be treated, were needed.

The Applicant has unexpectedly and surprisingly found a formulations solving the above technical problem.

It is an object of the present invention a method to modulate the release rate of microencapsulated actives comprising:

1a) addition or subtraction of piperonylbutoxide (PBO), component B) to
2a) formulations A) comprising at least one microencapsulated active having agrochemical activity, optionally PBO outside the microcapsule,
3a) dilution by water of component A) and/or component B) until the active application dose,

the ratio by weight PBO/active ranges from 0.1 to 80, the PBO subtraction being feasible only when the PBO is present outside the microcapsule of the formulation A).

In step 1a) component B) is added or subtracted outside the microcapsules of formulation A).

It has surprisingly and unexpectedly been found that the PBO addition, or its subtraction, to formulations A) having a ratio by weight (w) PBO/active within the above range, allows to modulate the release rate of the active from the microcapsules.

The active having agrochemical activity are preferably insecticides, acaricides, fungicides, snailicides, antihelminthics or herbicides.

In formulations A) the ratio by weight PBO/active preferably ranges from 1 to 50, more preferably from 5 to 30, still more preferably from 10 to 20.

Component B) is always added (or subtracted) to the formulation A) in order to have a variation of the active release rate from the microcapsule according to the test described in the Examples.

Generally the PBO addition preferably ranges from 20% to 600% by weight of the PBO outside the microcapsule of formulation A).

For formulations A) not containing PBO outside the microcapsule, the addition of component B) is such to bring the PBO/active ratio by w from 0.1 to 80, preferably 1 to 40, more preferably 3 to 20.

From the industrial point of view the use of PBO as component B) according to the present invention is particularly advantageous as the manufacturer can prepare a commercial formulation A), then the end user can change the active release rate, depending on the particular agrochemical application, by adding or subtracting PBO to the commercial formulation. This avoids to prepare numerous formulations necessary to meet the user requirements.

The subtraction (reduction) of PBO can be achieved, for example, by microfiltration techniques.

In an embodiment of the present invention, the ratio by weight between PBO external to the microcapsules and the active is preferably different from the following values: $5 \pm 0.5$ when the active is bifenthrin; $2.2 \pm 0.2$ when the active is $\alpha$-cypermethrin; $1 \pm 0.1$ when the active is diazinone; $3 \pm 0.3$ when the active is acetamiprid; $2 \pm 0.2$ when the active is deltamethrin; $1 \pm 0.1$ when the active is etofenprox; $1.5 \pm 0.2$ when the active is z-cypermethrin; $3 \pm 0.3$ when the active is fenazaquin; $4 \pm 0.4$ when the active is pyridaben; $3.2 \pm 0.3$ when the active is lambda-cyhalothrin.

The formulations A) contain microencapsulated actives preferably in water suspension; when PBO is outside the capsule, it is present as a water emulsion. The active concentration in formulation A) is generally comprised from 1% up to 60% by weight, preferably 2.5% to 55% by weight, still more preferably 5% to 45% by weight.

The actives belong to one of the following classes of chemical products: pyrethroids, carbamates, organophosphates, thioureas, pentatomic or hexatomic heterocycles wherein 1, 2 or 3 nitrogen atoms are present, as, for example, pyridine, pyrrole, imidazol, benzimidazol, thiazole, pyrazole, pyridazine, quinazoline, oxadiazine, triazine; dinitro-aniline, chloroacetamide derivatives, and diphenylethers.

The following are particularly preferred:

(1) Pyrethroids, as for example Allethrin, Bioallethrin, Tetramethrin, Prallethrin, Cypermethrin, $\beta$-Cypermethrin, $\zeta$-Cypermethrin, Esbiothrin, Permethrin, Fenproprathrin, Transfluthrin, Bifenthrin, Resmethrin, Bioresmethrin, Fenvalerate, Esfenvalerate, Tetramethrin, Imiprothrin, Phenothrin, $\beta$-Cyfluthrin, Delta-methrin, Cyhalothrin, Etofenprox, Silafluofen, pyrethrum extracts and their mixtures, etc..

(2) Neonicotinoids, as for example, Imidacloprid, Acetamiprid, Thiacloprid, Thiamethoxam and AKD1022.

(3) Carbamates, as Pyrimicarb, Aldicarb, Thiodicarb, Carbofuran, Carbosulfan, and Propoxur.

(4) Organophosphates, as for example Profenofos, Dimethoate, Omethoate, Terbufos, Azinphos-methyl, Demeton-s-methyl, Piriminphos-methyl, Fenitrothion, Trichlorfon and Malathion.

(5) Mitochondrial electronic carrier inhibitors ("METI"), as for example Fenazaquin, Tebufenpyrad, Fenpyroximate, Pyridaben and Tolfenpyrad.

(6) Fungicides, as for example Fludioxonil and Pyrimethanyl.

(7) Antihelminthics, as for example Mebendazole, Metronidazole, Fenbendazole, Thiabendazole, Clotrimazole and Praziquantel.

(8) Nerve transmission inhibitors, as for example Indoxacarb and Fipronil.

(9) Other actives wherein the action mechanism against the harmful species is still uncertain or they have miscellaneous type mechanisms, as for example Pymetrozine, Chlorfenapyr and Pyridalyl.

(10) Herbicides as for example: among dinitroanilines, for example, pendimethalin and trifluralin; among chloroacetamide derivatives, for example, alachlor, acetochlor, dimetenamide, metolachlor, pethoxamide, pretilachlor; among carbamates, for example, molinate, triallate, EPTC; among diphenylethers, for example, oxyfluorfen. Other usable herbicides are: flurochloridone, clomazone, dichlobenil.

As actives, more preferred are the following: Allethrin, Bioallethrin, Tetramethrin, Prallethrin, Cypermethrines, Esbiothrin, Permethrin, Fenproprathrin, Transfluthrin, Bifenthrin, Resmethrin, Bioresmethrin, Fenvalerate, Esfenvalerate, Etofenprox, Imiprothrin, Phenothrin, β-Cyfluthrin, Deltamethrin, Cyhalothrin, Imidacloprid, Acetamiprid, Thiacloprid, Thiodicarb, Carbosulfan, Carbofuran, Fenazaquin, Pyridaben, Fludioxonil, Pyrimethanyl, Fenbendazole, Clotrimazole, Praziquantel, Fipronil, Pymetrozine and Pyridalyl.

In addition to the actives, the microcapsules can contain other components as, for example, synergic agents of the actives. Preferably the latter contain at least one carbocyclic aromatic ring or phosphoric derivatives. Piperonylbutoxide (PBO) and its analogues, sesamol, verbutin, MGK 264, DEF can for example be mentioned. PBO and its analogues, verbutin are preferred. PBO is particularly preferred.

Other components inside the microcapsules are solvents, as for example:

- $C_9$-$C_{20}$ alkylbenzenes, preferably $C_{10}$-$C_{16}$, and their mixtures, wherein the alkyl can be linear or branched, when possible. Solvesso® 150, Solvesso® 200, Solvesso® 150 ND, Solvesso® 200 ND, preferably free from naphthalene residues, such as Solvesso® 150 ND and Solvesso® 200 ND, can be mentioned;
- $C_1$-$C_4$ alkyl esters of $C_3$-$C_{14}$ bicarboxilic acids, as for example dimethyl glutarate, dimethyl succinate, dimethyl adipate, dimethyl sebacate, or their mixtures, preferably DBE (mixture containing 55-65% weight/weight of dimethyl glutarate, 15-25% of dimethyl succinate and 10-25% of dimethyl adipate);
- $C_3$-$C_{14}$ alkyl esters of $C_3$-$C_{14}$ carboxylic acids or hydroxyacids, as for example Purasolv® EHL (ethylhexyl lactate) and isopropyl myristate;
- methyl esters of $C_{12}$-$C_{22}$ saturated or unsaturated fatty acids or their mixtures, preferably oleic acid and linoleic acid or their mixtures, for example biodiesel;
- $C_7$-$C_9$ alkyl esters of the acetic acid, for example heptylacetate (Exxate® 700, Exxate® 900).

The formulations A) can contain, in addition to the microcapsules, other components, as for example, dispersants, thickeners, antifoam, antifreeze, antimould agents and activity modifiers, etc.

Among dispersants, the following can be mentioned: ligninsulphonates, for example sodium ligninsulphates, as Reax® 100M, Reax® 88 B and Ultrazine® NA, and calcium ligninsulphonates, for example Borrement® CA, block polymers containing ethylenoxide and/or propylenoxide blocks, for example Pluronic® 10400, policarboxylates, for example sodium polycarboxylates, as Geropon® TA 72.

Among thickeners xanthan rubber (Rhodopol®) can be mentioned; among antifoam agents silicone compounds, as for example Defomex® 1510, can be cited.

Among antifreeze agents, inorganic salts, as calcium nitrate, sodium carbonate can be mentioned; as antimould agents, substituted triazines, as for example Amebact® C, and benzoisothiazo-linones, as Proxel® GXL, can be mentioned.

Among activity modifiers the following can be mentioned:

- "safener" (antidote), for example furylazole, cloquintocet-mexyl, in the case of herbicides;
- synergizing agents, as for example PBO (piperonylbutoxide), in particular in the case of insecticides, fungicides and herbicides;
- sexual pheromones and cairomones, in the case of insecticides.

Formulations A) containing a synergic agent inside the microcapsule, preferably PBO, are particularly preferred. The latter formulations preferably contain PBO even outside the microcapsule, but once the formulations A) are prepared the release time is fixed.

Component B) is added to formulations A) under the form of emulsion or emulsifiable liquid. By the latter it is meant a mixture of component B) and surfactants which forms in water a stable emulsion according to the CIPAC MT 36 method. Component B) in the emulsifiable liquid or in the emulsion is preferably present between 20% and 85% by weight.

Non ionic surfactants, preferably in admixture with anionic surfactants, are present in the emulsifiable liquid or in the emulsion. Examples of non ionic surfactants are alkylarylphenols, preferably ethoxylated, as for example ethoxylated tristyrylphenols, ethoxylated fatty alcohols, ethoxylated castor oil, ethoxylated sorbitan oleate, wherein the ethoxylated units can be from 1 to 60, preferably from 5 to 40. As examples of anionic sufactants, sulphonates, sulphosuccinates, etc., in particular dodecylbenzen sulphonates, for example Geronol® 60 BE, or dioctylsulpho-succinate, preferably under the form of salts, for example Ca, Na salts or amine salts, can be mentioned.

The compositions of the invention are applied, preferably sprayed on the ground, plants, in the air. After this, the release of the actives starts. The active is applied in its typical application dose, generally defined as agronomically effective amount of active diluted in water. Generally the water amount ranges from 50 to 2,000 l/hectare depending on the equipment used for the application, in the case of insecticides preferably from 600 to 1,200 l/hectare.

The PBO (component B)) can be added to formulations A), or viceversa, and then water is added until obtaining the active application dose. Alternatively water can be added to formulations A) and/or to component B) and then mixing.

The application dose is well known to the skilled in the art, depending on the active and/or the employments.

The compositions of the present invention can be under the form of aqueous suspoemulsions. The latter generally have a good stability. Alternatively, the compositions are under the form of water suspo-dispersions or water suspo-microemulsions. The skilled in the field is capable to easily prepare emulsions, dispersions, microemulsions and so on of the compositions of the invention by using the common general knowledge in this field.

Formulations A) can be prepared according to known techniques, for example according patent applications WO 2006/111,553 and WO 2007/039,055. They usually comprise polymeric microcapsules having an average diameter from 1 to 30 micron, preferably from 2 to 20. The microcapsules comprise a core of at least an active and a shell of polymeric material. The shell is formed of a water-insoluble polymeric membrane which is generally obtainable by interfacial polymerization in situ. Preferably the polymers are those obtainable by polycondensation. Polyamides, polyesters, polyurethanes-ureas, more preferably polyureas, can be mentioned.

As said, the addition, or the subtraction, of component B) to formulations A) allows to modify the release rate of the active depending on the final application. This is advantageous as it makes it possible to change the biological efficacy of a formulation and to broad the action spectrum.

Some illustrative examples follow.

## EXAMPLES

## <u>CHARACTERIZATION</u>

### Method for the analytical determination of the release kinetics of the active from the microcapsules

It consists in the deposit on Teflon disks of a known amount of the composition of the invention A)+B), diluted in water up to the application dose, and determining the active amount released from the microcapsules, at prefixed time intervals, for example 1, 2, 4, 6, 18, 24 hours, by extracting at each interval the released active with a solvent capable to solubilize the active and not to affect the microcapsule polymeric stability, for example n-hexane. A mild stirring is used in order to avoid the microcapsule breakage.

More particularly, the method for polyurea microcapsules is the following:

1 b) dilution with water of the composition of the invention A)+B) until obtaining a suspension containing from 5 to 100 g of active/1,000 liters of water (preferably 10-20 g/1,000 liters);
2b) placing 1 ml of the composition obtained in 1b) on a Teflon sheet having 6.5 x 5 x 0.02 cm sizes;
3b) at prefixed times, transferring the Teflon sheet into a 300 ml flask together with 50 ml of hexane;
4b) mild stirring for about 5 minutes;
5b) filtering on 0.45 $\mu$m filter;
6b) determination of the amount of active in the extraction solvent by the suitable analytical technique.

The procedure is repeated after each prefixed time interval, by using each time a different Teflon sheet. From the results a release kinetic of the active is determined, by plotting the relative amount of active (in % referred to the initial concentration of the active in the microcapsule) released from the capsule in function of the time. The relative amount can be calculated as follows:

$$\text{relative amount \%} = C/C_F \times 100$$

wherein:

$C$ = concentration of active released from the microcapsule, as determined at step 6b);
$C_F$ = initial concentration of the active in the microcapsule of formulation A).

### Formulation stability at dilution

It is determined by suspendability (sedimentation) measurements according to CIPAC MT 161 method.

The greater the suspendability (< sedimentation), the greater the stability of the composition.

**Accelerated stability Test of the suspension**

This test is used to estimate the behaviour of the suspensions at room temperature for times longer than 1 year, by assuming that one day at 54°C corresponds to about 1 month at room temperature.

According to the CIPAC MT 46 test, the composition is left at 54°C for 14 days (ageing test) and then the titre and encapsulation efficiency are evaluated.

**Bioassay method**

- **Leaf dip bioassay method**

The biological activity is evaluated in laboratory on a suitable species of insect by using the method known in the prior art as "leaf dip bioassay method" and described, for example, by Cahill, M. et al, Bull. Entomol. Res. 85, 181-187, 1995. Cotton plants grown without being exposed to insecticides are cut in the form of disks with a diameter of 4 cm. The disks are dipped into the insecticide solution containing 0.01% (% by weight) of Agral® (non ionic surfactant) and dried at room temperature. The insecticide solutions are such to obtain a mortality range between 0 and 100%. The control leaves are dipped into a solution formed of Agral 0.01% in water. Once dried, the disks are placed on agar (0.5%) in a petri (diameter 3 cm, height 1.5 cm). About 20 adult insects are placed on treated cotton disks and left at 25°C for 24 hours. The alive insects are counted at time zero, after 24 and 48 hours, to verify the mortality.

**- Potter Precision Laboratory Spray Tower**

The efficacy of the formulations was tested using a Potter Precision Laboratory Spray Tower, as described in "Laboratory apparatus for applying direct sprays and residual films", The Annual of Applied Biology, vol. 39, No. 1, March 1, 1952.

Test organisms were placed in a Petri dish (10-15 adults/replicate). The spray tower was calibrated with deionised water before application by adjusting the spraying pressure, application speed and type of nozzle to provide an output 2 mg/cm$^2$ $\pm$ 10% (200 l/ha). The applied amount was determined by weighing glass plates as reference before and immediately after treatment. After the calibration step the Petri dishes were sprayed with deionised water for the untreated control and then with the test items solutions starting from the lowest concentration. The sprayer equipment was rinsed several times with deionised water among the different application of the products. The condition of the test organisms were observed at different times: after 30', 1 h, 3h, 24h after treatment (AT).

**EXAMPLE** 1

Compositions comprising PBO and microcapsules of bifenthrin

**Step a): preparation of formulation A) containing 10% by weight of PBO external to the microcapsule**

20.8 g of active bifenthrin (96% purity) and 0.2 g of PBO (purity 94%) are added to 20 g of Solvesso 200 (mixture of $C_9$-$C_{16}$ alkylbenzenes, having a distillation range 226-284°C) contained in a vessel equipped with stirrer. The mixture is heated to 50°C and kept under stirring up to complete homogeneization. Then, under stirring, 2.87 g of Voronate® M 220 (isocyanate MDI) are added.

The so prepared mixture is added to a dispersion of 1.0 g of dispersant Borrement® CA and 39.0 g of water. Then the mixture is stirred in Turrax at the maximum speed (about 10,000 rpm) for about 2 minutes. An oil/water emulsion is obtained.

Then 2.75 g of an aqueous solution containing 40% by weight of hexamethylendiamine (HMDA) are added, under stirring, by using a stirrer at 800 rpm.

The so obtained mixture is transferred into a reactor kept at 50°C. After few minutes 4.0 g of thickener (Rhodopol® 23 pregelled at 2.7% by weight of water and containing 1 g of Proxel® GXL as antimould agent), 0.2 g of antifoam agent Defomex® 1510 are added and left four hours at 50°C.

Then the mixture is cooled at room temperature and 9.0 g of calcium nitrate are added. A suspension of microcapsules having an active concentration of 200 g/l (20% weight) is obtained.

10.6 parts by weight of PBO (titre 94%), 0.2 parts by w of Defomex® 1510, 3.0 parts by w of Rhodopol® pregel, 2.4 parts by w of Geronol® TE777 and 73.8 parts by w of water are added to 10 parts by w of the obtained suspension, obtaining an active content in the suspension of about 20 g/l (2% by w of active). The PBO inside the microcapsule is about 0.2 g/l, (0.02% by w) the PBO external to the microcapsule is about 100 g/l (10% by w).

The accelerated stability test of the obtained suspoemulsion is carried out as described in the characterization.

The chemico-physical stability of the suspoemulsion did not change.

**Step b): addition of PBO component B) in the form of emulsifiable liquid**

11 parts by weight of a mixture B), formed for 80% by weight of PBO and for 20% by weight of a mixture 4:1 by weight of Geronol® FF6 and Geronol® FF475, are added under mild stirring to 89 parts by w of suspoemulsion A). The PBO added amount is about 5 times by weight the active amount. The active content in the composition, (indicated as (A+B)), is 1.8% by weight and the ratio by w external PBO and active is 10:1.

The same procedure is followed by adding to 72.7 parts by w of the formulation A), 27.3 parts by w of B) (equal to 15 times by weight the active amount). The active in this composition, (indicated as (A+B)'), is 1.45% by weight and the ratio by w between external PBO and active is 20:1.

Then the formulation A) and the compositions (A+B) and (A+B)' are diluted with water until obtaining a bifenthrin concentration equal to 20 mg/litre. By using the procedure described in the characterization and n-hexane as extraction solvent, the content of bifenthrin released from the microcapsules is determined by GC-ECD technique. The bifenthrin concentration is determined after prefixed time intervals. The data are reported in Table 1.

**Table 1**

| Time (h) | A) (%) | (A+B) (%) | (A+B)' (%) |
|---|---|---|---|
| 1 | 5 | 7 | 8 |
| 2 | 5 | 7 | 23 |
| 4 | 7 | 30 | 45 |
| 6 | 15 | 45 | 67 |
| 18 | 17 | 55 | 80 |
| 24 | 17 | 71 | 93 |

**EXAMPLE 2**

Compositions comprising PBO and microcapsules of bifenthrin

Example 1 is repeated but in step a) the suspension of microcapsules is prepared by using the following reactants:

| | |
|---|---|
| Bifenthrin (96%) | 15.6 g |
| PBO (94%) | 0.15 g |
| Purasolv® EHL | 15.0 g |
| Voronate® M220 | 2.14 g |
| HMDA at 40% by w | 2.06 g |
| Reax® 88 B | 1.1 g |
| Calcium nitrate | 9.0 g |
| Water | 53.0 g |

A suspension of microcapsules having an active amount equal to 15% by w and PBO inside the microcapsule equal to 0.14% by w is obtained.

Then to 66.7 parts by w of the so obtained suspension, 0.2 parts by w of Defomex® 1510, 5 parts by w of Rhodopol® 23 (pregel at 2,7% by w), 0.1 parts by w of Proxel® GXL, 28 parts by w of water are added. A suspension of microcapsules containing 10% by weight of active and 0.1% by weight of PBO inside the microcapsule is obtained. The obtained suspension A) is subjected to the stability tests (see characterization). The suspension is chemically and physically stable.

**Step b)**

As reported in step b) of Example 1, 72.2 parts by w of the suspension A) are added to 27.8 parts by weight of a mixture B), thus obtaining the composition indicated as (A+B). The active content is 7.2% by weight, the PBO amount is about 3 times by weight the active amount.

The same procedure is repeated by adding 42.9 parts by w of B) to 57.1 parts by w of the formulation A) obtaining the composition (A+B)'. The active amount is 5.7% by weight and the ratio by w between PBO external to the microcapsule and active is 6.

Analogously, to 47 parts by w of A), 53 parts by w of B) are added. The ratio by w between PBO external to the microcapsule and active is 9. In the so obtained composition (A+B)", the active concentration is 4.7% by weight.

Then the formulation A), (A+B), (A+B)' and (A+B)" are diluted as in Example 1 with water until obtaining a bifenthrin concentration equal to 20 mg/litre. The data of the active bifenthrin at various prefixed times are reported in Table 2.

**Table 2**

| Time(h) | A) (%) | (A+B) (%) | (A+B)' (%) | (A+B)" (%) |
|---|---|---|---|---|
| 1 | 5 | 32 | 38 | 38 |
| 2 | 12 | 38 | 54 | 53 |
| 4 | 18 | 47 | 79 | 76 |
| 6 | 23 | 67 | 91 | 100 |
| 18 | 30 | 68 | 100 | 100 |
| 24 | 37 | 70 | 100 | 100 |

## EXAMPLE 3

Compositions comprising PBO and microcapsules of $\alpha$-cypermethrin

**Step a): preparation of formulation A) containing 20% by weight of PBO external to the microcapsule**

Example 1 was repeated but in step a) a suspension of microcapsules is prepared by using the following reactants:

| | |
|---|---|
| $\alpha$-cypermethrin (98%) | 15.3 g |
| PBO (94%) | 15.8 g |
| Voronate®M220 | 2.18 g |
| Ultrazine®Na | 1.1 g |
| HMDA at 40% by w | 2.1 g |
| Calcium nitrate | 10 g |
| Water | 50 g |

A suspension of microcapsules having an active amount of 15% by w and PBO (inside the microcapsule) of 15% by w is thus obtained.

Then 23.7 parts by w of PBO, 0.2 parts by w of Defomex® 1510, 3.0 parts by w of Rhodopol® pregel, 2.4 parts by w of Geronol® TE777 and 37.3 parts by w of water are added to 33.4 parts by w of the obtained suspension, thus obtaining an active amount of 50 g/l (5% by w), an amount of PBO inside the microcapsule of 50 g/l (5% by w), the PBO external to the microcapsule is about 200 g/l (20% by w).

The obtained suspension is subjected to the stability tests (see characterization). The suspension is chemically and physically stable.

**Step b)**

As reported in step b) of Example 1 but using 45.7 parts by w of formulation A) and 54.3 parts by w of the mixture B). The PBO added is about 16 times by weight the amount of active. The active content in the composition thus obtained (A+B) is 2.3% by weight and the ratio by w between PBO external to the microcapsule and active is 20:1.

Then the formulation A) and the composition (A+B) are diluted as in Example 1 with water until obtaining a concentration of $\alpha$-cypermethrin equal to 20 mg/litre and characterized as in example 1. The data are reported in Table 3.

### Table 3

| Time (h) | A) (%) | (A+B) (%) |
|---|---|---|
| 1 | 28 | 49 |
| 2 | 36 | 62 |
| 4 | 42 | 72 |
| 6 | 54 | 83 |
| 18 | 78 | 100 |
| 24 | 90 | 100 |

**EXAMPLE 4**

Compositions comprising PBO and microcapsules of $\alpha$-cypermethrin

Example 1 has been repeated but in step a) a suspension of microcapsules is prepared by using the following reactants:

| | |
|---|---|
| $\alpha$-cypermethrin (titre 96%) | 15.3 g |
| PBO (94%) | 0.2 g |
| Purasolv® EHL | 15 g |
| Voronate®M 220 | 2.1 g |
| Borrement®CA | 1.0 g |
| HMDA at 40% by w | 2.06 g |
| Defomex®1510 | 1.1 g |
| Calcium nitrate | 10.0 g |
| Water | 53.1 g |

A suspension of microcapsules having an active content equal to 15% and PBO equal to 0.19% by weight is obtained.

Then to 33.3 parts by w of the so obtained suspension, 0.2 parts by w of Defomex®, 5 parts by w of Rhodopol®, 2.4 parts by w of Proxel® GXL, 25.7 parts by w of water are added, thus obtaining a suspension of microcapsules containing 5% by weight of active, the amount of PBO inside the microcapsule is 0.06% by w. The accelerated stability test of the obtained suspension is carried out as described in the characterization. The suspension is chemically and physically stable.

**Step b)**

Example 1 has been repeated but in step b) 84.2 parts by w of the formulation A) are added to 15.8 parts by w of the mixture B). The PBO amount is about 3 times the active amount. The obtained composition (A+B) has an active content of 4.2% by weight.

The same procedure is repeated by adding to 76.2 parts by w of the formulation A) 23.8 parts by w of B) to obtain a ratio by w between external PBO and active equal to 5/1. The obtained composition (A+B)' has an active content of about 3.8% weight.

One proceeds analogously for the preparation of the composition (A+B)" by adding to 44.4 parts by w of A) 55.6 parts by w of B) such to have a ratio by w between external PBO and active equal to 20 times by weight. The active content in (A+B)" is 2.2% by w.

Then, formulation A) and the compositions A) + (A+B), (A+B)', (A+B)" are diluted with water until obtaining an $\alpha$-cypermethrin concentration equal to 20 mg/litre and characterized as in Example 1. The data are reported in Table 4.

### Table 4

| Time(h) | A) (%) | (A+B) (%) | (A+B)' (%) | (A+B)" (%) |
|---|---|---|---|---|
| 6 | 42 | 43 | 54 | 55 |
| 18 | 44 | 58 | 65 | 79 |

(continued)

| | A) | (A+B) | (A+B)' | (A+B)" |
|---|---|---|---|---|
| 24 | 44 | 69 | 71 | 88 |

## EXAMPLE 5

Compositions comprising PBO and microcapsules of λ-cyhalothrin

Example 1 has been repeated but in step a) a suspension of microcapsules is prepared by using the following reactants:

| | |
|---|---|
| λ-cyhalothrin (96%) | 15.6 g |
| PBO (94%) | 16.0 g |
| Voronate® M 220 | 2.21 g |
| HMDA at 40% by w | 2.15 g |
| Reax® 88 B | 1.1 g |
| Calcium nitrate | 10.0 g |
| Water | 52.94 g |

A suspension of microcapsules having a content of active equal to 15% by weight and PBO inside the microcapsule equal to 15% by weight is thus obtained.

Then to 33.3 parts by w of the obtained suspension, 0.2 parts by w of Defomex® 1510, 5 parts by w of Rhodopol® pregel, 5 parts by w of Geronol® TE777 and 56.5 parts by w of water have been added, thus obtaining an active content of 50 g/l (5% by w), PBO inside the microcapsule suspension of 50 g/l (5% by w). The obtained suspension is subjected to the stability tests (see characterization). The suspension is chemically and physically stable.

## Step b)

As reported in step b) of Example 1 but using 76.2 parts by w of the formulation A) and 23.8 parts by weight of the mixture B). The PBO amount is about 5 times the active content, the obtained composition (A+B) has an active content of 3.81% by weight.

The same procedure is repeated by adding to 61.5 parts by w of the formulation A) 38.5 parts by w of PBO in emulsion. The ratio by w between external PBO and active is 10/1, thus obtaining a composition (A+B)', wherein the active content is equal to 3.07% w/w.

Analogously one proceeds to the preparation of the composition indicated as (A+B)", for obtaining a ratio by w between external PBO and active equal to 20 times weight, thus adding to 44.4 parts by w of formulation A) 55.6 parts by w of B). The active content is 2.22% by weight.

Then the formulation A) and the compositions (A+B), (A+B)', (A+B)" are diluted with water until obtaining a λ-cyhalothrin concentration equal to 20 mg/liter and characterized as in Example 1. The data reported in Table 5.

### Table 5

| Time(h) | A) (%) | (A+B) (%) | (A+B)' (%) | (A+B)" (%) |
|---|---|---|---|---|
| 1 | 10 | 29 | 37 | 35 |
| 2 | 11 | 31 | 49 | 57 |
| 4 | 21 | 31 | 75 | 71 |
| 6 | 21 | 52 | 92 | 100 |
| 18 | 29 | 65 | 100 | 100 |
| 24 | 35 | 72 | 100 | 100 |

### EXAMPLE 6

Compositions comprising PBO and microcapsules of fenazaguin

Example 1 has been repeated but in step a) a suspension of microcapsules is prepared by using the following reactants:

| | |
|---|---|
| fenazaquin (97%) | 15.4 g |
| PBO (94%) | 0.15 g |
| Purasolv® EHL | 15.0 g |
| Voronate® M 220 | 2.14 g |
| Borrement® CA | 1.0 g |
| HMDA at 40% by w | 2.06 g |
| Reax® 88 B | 1.1 g |
| Calcium nitrate | 9.0 g |
| Water | 54.1 g |

A suspension of microcapsules having an active content equal to 15% by w is thus obtained.

Then, to 66.7 parts by w of the obtained suspension 0.2 parts by w of Defomex 1510, 5.0 parts by w of Rhodopol®, 0.1 parts by w of Proxel® GXL and 28 parts by w of water have been added, thus obtaining an active content in the suspension equal to about 100 g/l (10% by w of active), the PBO inside the microcapsule is about 1 g/l (0.1 % by w).

The obtained suspension is subjected to the stability tests (see characterization). The suspension is chemically and physically stable.

### Step b)

As repeated in step b) of Example 1 but using 28.6 parts by w of formulation A) and 71.4 parts by weight of the mixture B). The PBO added is about 20 times the active. The active content in the composition thus obtained (A+B) is 2.86% by weight.

Then the formulation A) and the composition (A+B) are diluted with water until obtaining a concentration of fenazaquin equal to 10 mg/litre and characterized as in Example 1. The data reported in Table 6.

**Table 6**

| Time(h) | A) (%) | (A+B) (%) |
|---|---|---|
| 1 | 14 | 8 |
| 2 | 26 | 42 |
| 4 | 30 | 59 |
| 6 | 35 | 64 |
| 18 | 55 | 88 |
| 24 | 56 | 96 |

### EXAMPLE 7

Efficacy trials

The compositions described in example 2 were tested on a susceptible strain of Aphis fabae, using a Potter Tower as in the characterization on approximately 15 adult females of Aphis fabae placed on a Petri dish of 6 cm diameter, as reported in the characterization Bioassay Metod - Potter Precision Laboratory Spray Tower. The suspension of microcapsules A) and the compositions (A+B), (A+B)', and (A+B)" were diluted in water as in Example 1 up to an applicative dosage of 3 g of active ingredient/ha.

As a comparison the mixture B) as in Example 1 was diluted in water up to an applicative dosage of 27 g of Piperonyl butoxide/ha.

The treatments were performed at a pressure correspondent to 2.7 mbar using a volume of insecticidal solution equal to 1.25 ml. After each treatment the Potter Tower was washed several times with demineralized water. The efficacy in terms of mortality of the aphids was evaluated after 1 hour, 2 hours, 4 hours and 6 hours.

**Table 7**

**Efficacy of the formulations based on microencapsulated bifenthrin, suspension A) and compositions (A+B), (A+B)' and (A+B)'' tested on Aphis fabae**

| | Mortality (%) after 1h | Mortality (%) after 2h | Mortality (%) after 4h | Mortality (%) after 6 h |
|---|---|---|---|---|
| Control (Mixture B) | 0 | 0 | 0 | 0 |
| A) | 14 | 22 | 26 | 32 |
| (A+B) | 65 | 80 | 91 | 100 |
| (A+B)' | 82 | 93 | 100 | 100 |
| (A+B)'' | 83 | 98 | 100 | 100 |

**Claims**

1. A method for regulating the release rate of microencapsulated actives comprising:

   1a) addition or subtraction of piperonylbutoxide (PBO), component B) to
   2a) formulations A) comprising at least one microencapsulated active having agrochemical activity, optionally PBO outside the microcapsule,
   3a) dilution by water of component A) and/or component B) until the active application dose,

   the ratio by weight PBO/active ranges from 0.1 to 80, the PBO subtraction being feasible only when the PBO is present outside the microcapsule of the formulation A),
   wherein component B) is added to formulations A) under the form of emulsion or emulsifiable liquid.

2. A method according to claim 1, wherein the active having agrochemical activity are insecticides, acaricides, fungicides, snailicides, antihelminthics or herbicides.

3. A method according to claims 1-2, wherein the ratio by weight PBO/active in formulation A) ranges from 1 to 50, preferably 5 to 30, more preferably 10 a 20.

4. A method according to claims 1-3, wherein the addition of PBO (component B) ranges from 20% to 600% by weight of the PBO outside the microcapsule of formulation A).

5. A method according to claims 1-4, wherein for formulations A) not containing PBO outside the microcapsule, the addition of component B) is such to bring the PBO/active ratio by w comprised from 0.1 to 80, preferably 1 to 40, more preferably 3 to 20.

6. A method according to claims 1-5, wherein the formulations A) contain microencapsulated actives in water suspension, optionally PBO in emulsion.

7. A method according to claims 1-6, wherein the active concentration in formulation A) is comprised from 1% up to 60% by weight, preferably 2.5% to 55% by weight, more preferably 5% to 45% by weight.

8. A method according to claims 1-7, wherein the actives belong to one of the following classes: pyrethroids, carbamates, organophosphates, thioureas, pentatomic or hexatomic heterocycles where 1, 2 or 3 nitrogen atoms are present, as pyridine, pyrrole, imidazol, benzimidazole, thiazole, pyrazole, pyridazine, quinazoline, oxadiazine, triazine; dinitroaniline, chloroacetamide derivatives, and diphenylethers.

9. A method according to claim 8, wherein the actives are: (1) pyrethroids, selected from Allethrin, Bioallethrin, Tetramethrin, Prallethrin, Cypermethrin, β-Cypermethrin, ζ-Cypermethrin, Esbiothrin, Permethrin, Fenproprathrin, Transfluthrin, Bifenthrin, Resmethrin, Bioresmethrin, Fenvalerate, Esfenvalerate, Tetramethrin, Imiprothrin, Phenothrin, β-Cyfluthrin, Deltamethrin, Cyhalothrin, Etofenprox, Silafluofen, pyrethrum extracts and their mixtures, etc. (2) neonicotinoids, selected from Imidacloprid, Acetamiprid, Thiacloprid, Thiamethoxam and AKD1022; (3) carbamates, selected from for example Pyrimicarb, Aldicarb, Thiodicarb, Carbofuran, Carbosulfan, and Propoxur; (4) organophosphates, selected from Profenofos, Dimethoate, Omethoate, Terbufos, Azinphos-methyl, Demeton-s-methyl, Piriminphos-methyl, Fenitrothion, Trichlorfon and Malathion; (5) mitochondrial electronic carrier inhibitors ("METI"), selected from Fenazaquin, Tebufenpyrad, Fenpyroximate, Pyridaben and Tolfenpyrad; (6) fungicides, selected from Fludioxonil and Pyrimethanyl; (7) antihelminthics, selected from Mebendazole, Metronidazole, Fenbendazole, Thiabendazole, Clotrimazole and Praziquantel; (8) nerve transmission inhibitors, selected from Indoxacarb and Fipronil; (9) other actives selected from Pymetrozine, Chlorfenapyr, Pyridalyl; (10) herbicides: selected from dinitroanilines, preferably pendimethalin and trifluralin; chloroacetamide derivatives, preferably alachlor, acetochlor, dimetenamide, metolachlor, pethoxamide, pretilachlor; carbamates, preferably molinate, triallate, EPTC; diphenylethers, preferably oxyfluorfen; flurochloridone, clomazone, dichlobenil.

10. Method according to claim 9, wherein the actives are: Allethrin, Bioallethrin, Tetramethrin, Prallethrin, Cypermethrines, Esbiothrin, Permethrin, Fenproprathrin, Transfluthrin, Bifenthrin, Resmethrin, Bioresmethrin, Fenvalerate, Esfenvalerate, Etofenprox, Imiprothrin, Phenothrin, β-Cyfluthrin, Deltamethrin, Cyhalothrin, Imidacloprid, Acetamiprid, Thiacloprid, Thiodicarb, Carbosulfan, Carbofuran, Fenazaquin, Pyridaben, Fludioxonil, Pyrimethanyl, Fenbendazole, Clotrimazole, Praziquantel, Fipronil, Pymetrozine and Pyridalyl.

11. A method according to claims 1-10, wherein, in addition to the actives, the microcapsule can contain synergic agents of the actives containing at least one carbocyclic aromatic ring or phosphoric derivatives.

12. A method according to claim 11, wherein the synergic agents are selected from piperonylbutoxide (PBO) and its analogues, sesamol, verbutin, MGK 264, DEF, preferably PBO and its analogues, verbutin, preferably PBO.

13. A method according to claims 1-12, wherein the microcapsule can contain solvents selected from:

- $C_9$-$C_{20}$ alkylbenzenes, preferably $C_{10}$-$C_{16}$, and their mixtures, wherein the alkyl is linear or branched, when possible, preferably Solvesso® 150, Solvesso® 200, Solvesso® 150 ND, Solvesso® 200 ND, more preferably free from naphthalene residues;
- $C_1$-$C_4$ alkyl esters of $C_3$-$C_{14}$ bicarboxylic acids, preferably dimethyl glutarate, dimethyl succinate, dimethyl adipate, dimethyl sebacate, or their mixtures, more preferably DBE;
- $C_3$-$C_{14}$ alkyl esters of $C_3$-$C_{14}$ carboxylic acids or hydroxyacids, preferably Purasolv® EHL and isopropyl myristate;
- methyl esters of $C_{12}$-$C_{22}$ saturated or unsaturated fatty acids or their mixtures, preferably oleic acid and linoleic acid or their mixtures, preferably biodiesel;
- $C_7$-$C_9$ alkyl esters of the acetic acid, preferably heptylacetate.

14. A method according to claims 1-13, wherein the formulations A) contain, in addition to the microcapsules, other components selected from dispersants, thickeners, antifoam, antifreeze, antimould agents and activity modifiers.

15. A method according to claim 14, wherein the activity modifiers are selected from: "safener" (antidote), preferably furylazole, cloquintocet-mexyl; synergizing agents, preferably PBO; sexual pheromones and cairomones.

16. A method according to claims 1-15, wherein the formulations A) contain a synergic agent inside the microcapsule, preferably PBO.

17. A method according to claim 16, wherein the formulations A) contain PBO outside the microcapsule.

18. A method according to claims 1-17 wherein the emulsion or the emulsifiable liquid comprising PBO includes non ionic surfactants or nonionic surfactants in admixture with anionic surfactants.

19. A method according to claims 1-18, wherein the microcapsule shell is formed by a water.insoluble polymeric membrane obtainable by interfacial polymerization in situ, the polymers being selected from polyamides, polyesters, polyurethanes-ureas, polyureas,

**Patentansprüche**

1. Verfahren zum Regulieren der Freisetzungsrate mikroverkapselter Wirkstoffe umfassend:

1a) Zugabe oder Wegnahme von Piperonylbutoxid (PBO), Komponente B) zu

2a) Formulierungen A) umfassend mindestens einen mikroverkapselten Wirkstoff mit agrochemischer Aktivität, gegebenenfalls PBO außerhalb der Mikrokapsel,

3a) Verdünnen der Komponente A) und/oder Komponente B) mit Wasser bis zur Wirkstoffanwendungsdosis,

wobei das Gewichtsverhältnis PBO/Wirkstoff von 0,1 bis 80 reicht, die Wegnahme von PBO nur durchführbar ist, wenn das PBO außerhalb der Mikrokapsel der Formulierung A) vorhanden ist, wobei die Komponente B) in Form einer Emulsion oder einer emulgierbaren Flüssigkeit zu der Formulierungen A) gegeben wird.

2. Verfahren nach Anspruch 1, wobei der Wirkstoff mit agrochemischer Aktivität Insektizide, Akarizide, Fungizide, Molluskizide, Anthelminitika oder Herbizide sind.

3. Verfahren nach den Ansprüchen 1-2, wobei das Gewichtsverhältnis PBO/Wirkstoff in der Formulierung A) von 1 bis 50, vorzugsweise 5 bis 30, weiter bevorzugt 10 a 20 reicht.

4. Verfahren nach den Ansprüchen 1-3, wobei die Zugabe von PBO (Komponente B) von 20 Gew.-% bis 600 Gew.-% des PBOs außerhalb der Mikrokapsel der Formulierung A) reicht.

5. Verfahren nach den Ansprüchen 1-4, wobei bei Formulierungen A), die kein PBO außerhalb der Mikrokapsel enthalten, die Zugabe der Komponente B) derart ist, dass das Gewichtsverhältnis PBO/Wirkstoffvon 0,1 bis 80, vorzugsweise 1 bis 40, weiter bevorzugt 3 bis 20 beträgt.

6. Verfahren nach den Ansprüchen 1-5, wobei die Formulierungen A) mikroverkapselte Wirkstoffe in einer Wassersuspension, optional PBO in Emulsion, enthalten.

7. Verfahren nach den Ansprüchen 1-6, wobei die Wirkstoffkonzentration in der Formulierung A) von 1 Gew.-% bis zu 60 Gew.-%, vorzugsweise 2,5 Gew.-% bis 55 Gew.-%, weiter bevorzugt 5 Gew.-% bis 45 Gew.-% beträgt.

8. Verfahren nach den Ansprüchen 1-7, wobei die Wirkstoffe einer der folgenden Klassen angehören: Pyrethroide, Carbamate, Organophosphate, Thioharnstoffe, fünfgliedrige oder sechsgliedrige Heterocyclen mit 1, 2 oder 3 Stickstoffatomen wie Pyridin, Pyrrol, Imidazol, Benzimidazol, Thiazol, Pyrazol, Pyridazin, Chinazolin, Oxadiazin, Triazin; Dinitroanilin, Chloracetamid-Derivate und Diphenylether.

9. Verfahren nach Anspruch 8, wobei die Wirkstoffe sind: (1) Pyrethroide ausgewählt aus Allethrin, Bioallethrin, Tetramethrin, Prallethrin, Cypermethrin, β-Cypermethrin, ζ-Cypermethrin, Esbiothrin, Permethrin, Fenproprathrin, Transfluthrin, Bifenthrin, Resmethrin, Bioresmethrin, Fenvalerat, Esfenvalerat, Tetramethrin, Imiprothrin, Phenothrin, β-Cyfluthrin, Deltamethrin, Cyhalothrin, Etofenprox, Silafluofen, Pyrethrumextrakte und deren Mischungen, usw. (2) Neonicotinoide ausgewählt aus Imidacloprid, Acetamiprid, Thiacloprid, Thiamethoxam und AKD1022; (3) Carbamate ausgewählt aus beispielsweise Pyrimicarb, Aldicarb, Thiodicarb, Carbofuran, Carbosulfan und Propoxur; (4) Organophosphate ausgewählt aus Profenofos, Dimethoat, Omethoat, Terbufos, Azinphos-methyl, Demeton-s-methyl, Piriminphosmethyl, Fenitrothion, Trichlorfon und Malathion; (5) mitochondriale Elektronentransportinhibitoren ("METI") ausgewählt aus Fenazaquin, Tebufenpyrad, Fenpyroximat, Pyridaben und Tolfenpyrad; (6) Fungizide ausgewählt aus Fludioxonil und Pyrimethanyl; (7) Anthelminitika ausgewählt aus Mebendazol, Metronidazol, Fenbendazol, Thiabendazol, Clotrimazol und Praziquantel; (8) Nervenübertragungsinhibitoren ausgewählt aus Indoxacarb und Fipronil; (9) andere Wirkstoffe ausgewählt aus Pymetrozin, Chlorfenapyr, Pyridalyl; (10) Herbizide: ausgewählt aus Dinitroanilinen, vorzugsweise Ppendimethalin und Trifluralin; Chloracetamid-Derivaten vorzugsweise Alachlor, Acetochlor, Dimetenamid, Metolachlor, Pethoxamid, Pretilachlor; Carbamaten vorzugsweise Molinat, Triallat, EPTC; Diphenylether vorzugsweise Oxyfluorfen; Flurchloridon, Clomazon, Dichlobenil.

10. Verfahren nach Anspruch 9, wobei die Wirkstoffe sind: Allethrin, Bioallethrin, Tetramethrin, Prallethrin, Cypermethrine, Esbiothrin, Permethrin, Fenproprathrin, Transfluthrin, Bifenthrin, Resmethrin, Bioresmethrin, Fenvalerat, Esfenvalerat, Etofenprox, Imiprothrin, Phenothrin, β-Cyfluthrin, Deltamethrin, Cyhalothrin, Imidacloprid, Acetamiprid, Thiacloprid, Thiodicarb, Carbosulfan, Carbofuran, Fenazaquin, Pyridaben, Fludioxonil, Pyrimethanyl, Fenbendazole, Clotrimazol, Praziquantel, Fipronil, Pymetrozin und Pyridalyl.

11. Verfahren nach den Ansprüchen 1-10, wobei die Mikrokapsel zusätzlich zu den Wirkstoffen synergistische Mittel der Wirkstoffe enthalten kann, welche mindestens einen carbocyclischen aromatischen Ring oder Phosphorderivate enthalten.

**12.** Verfahren nach Anspruch 11, wobei die synergistischen Mittel ausgewählt sind aus Piperonylbutoxid (PBO) und analogen Verbindungen davon, Sesamol, Verbutin, MGK 264, DEF, vorzugsweise PBO und analogen Verbindungen davon, Verbutin, vorzugsweise PBO.

**13.** Verfahren nach den Ansprüchen 1-12, wobei die Mikrokapsel Lösungsmittel enthalten kann ausgewählt aus:

- $C_9$-$C_{20}$-Alkylbenzolen, vorzugsweise $C_{10}$-$C_{16}$, und deren Mischungen, wobei das Alkyl linear oder verzweigt ist, falls möglich, vorzugsweise Solvesso® 150, Solvesso® 200, Solvesso® 150 ND, Solvesso® 200 ND, weiter bevorzugt frei von Naphthalinrückständen;
- $C_1$-$C_4$-Alkylester von $C_3$-$C_{14}$-Dicarbonsäuren, vorzugsweise Dimethylglutarat, Dimethylsuccinat, Dimethyladipat, Dimethylsebacat oder deren Mischungen, weiter bevorzugt DBE;
- $C_3$-$C_{14}$-Alkylester von $C_3$-$C_{14}$-Carbonsäuren oder Hydroxysäuren, vorzugsweise Purasolv® EHL und Isopropylmyristat;
- Methylester von gesättigten oder ungesättigten $C_{12}$-$C_{22}$-Fettsäuren oder deren Mischungen, vorzugsweise Oleinsäure und Linolsäure oder deren Mischungen, vorzugsweise Biodiesel;
- $C_7$-$C_9$-Alkylester der Essigsäure, vorzugsweise Heptylacetat.

**14.** Verfahren nach den Ansprüchen 1-13, wobei die Formulierungen A) zusätzlich zu den Mikrokapseln andere Komponenten enthalten ausgewählt aus Dispergiermitteln, Verdickungsmittel, Antischaummittel, Frostschutzmittel, Antischimmelmitteln und Aktivitätsmodifikatoren.

**15.** Verfahren nach Anspruch 14, wobei die Aktivitätsmodifikatoren ausgewählt sind aus: "Safener" (Antidot), vorzugsweise Furylazol, Cloquintocet-mexyl; synergistischen Mitteln, vorzugsweise PBO; Sexualpheromonen und Kairomonen.

**16.** Verfahren nach den Ansprüchen 1-15, wobei die Formulierungen A) ein synergistisches Mittel im Inneren der Mikrokapsel, vorzugsweise PBO, enthalten.

**17.** Verfahren nach Anspruch 16, wobei die Formulierungen A) PBO außerhalb der Mikrokapsel enthalten.

**18.** Verfahren nach den Ansprüchen 1-17 wobei die Emulsion oder emulgierbare Flüssigkeit, welche PBO umfasst, nichtionische Tenside oder nichtionische Tenside in einer Beimischung mit anionischen Tensiden enthält.

**19.** Verfahren nach den Ansprüchen 1-18, wobei die Mikrokapselhülle aus einer wasserunlöslichen Polymermembran gebildet ist, die erhältlich ist durch Grenzflächenpolymerisation in situ, wobei die Polymere ausgewählt sind aus Polyamiden, Polyestern, Polyurethanen-Harnstoffen, Polyharnstoffen.

## Revendications

**1.** Procédé de régulation de la vitesse de libération de substances actives micro-encapsulées, comprenant :

1a) l'addition ou la soustraction de pipéronylbutoxyde (PBO), le composant B) à :

2a) des formulations A) comprenant au moins une substance active micro-encapsulée ayant une activité agrochimique, le PBO étant facultativement hors de la microcapsule,
3a) la dilution avec de l'eau du composant A) et/ou du composant B) jusqu'à la dose d'application de la substance active,

le rapport en poids PBO/substance active est de 0,1 à 80, la soustraction de PBO étant seulement faisable quand le PBO est présent hors de la microcapsule de la formulation A),
dans lequel le composant B) est ajouté aux formulations A) sous la forme d'une émulsion ou d'un liquide émulsifiable.

**2.** Procédé selon la revendication 1, dans lequel la substance active ayant une activité agrochimique est un insecticide, un acaricide, un fongicide, un molluscicide, un antihelminthique ou un herbicide.

**3.** Procédé selon les revendications 1 et 2, dans lequel le rapport en poids PBO/substance active dans la formulation A) est de 1 à 50, de préférence de 5 à 30 et, de manière davantage préférée, de 10 à 20.

**4.** Procédé selon les revendications 1 à 3, dans lequel l'ajout de PBO (composant B) est de 20 % à 600 % en poids du PBO se trouvant hors de la microcapsule de formulation A).

**5.** Procédé selon les revendications 1 à 4, dans lequel, pour les formulations A) ne contenant pas de PBO hors de la microcapsule, l'ajout du composant B) est tel que le rapport en poids PBO/substance active est de 0,1 à 80, de préférence de 1 à 40 et, de manière davantage préférée, de 3 à 20.

**6.** Procédé selon les revendications 1 à 5, dans lequel les formulations A) contiennent des substances actives micro-encapsulées en suspension dans l'eau, le PBO étant facultativement en émulsion.

**7.** Procédé selon les revendications 1 à 6, dans lequel la concentration en substance active dans la formulation A) est de 1 % à 60 % en poids, de préférence de 2,5 % à 55 % en poids et, de manière davantage préférée, de 5 % à 45 % en poids.

**8.** Procédé selon les revendications 1 à 7, dans lequel les substances actives appartiennent à une des classes suivantes : les pyréthroïdes, les carbamates, les organophosphates, les thiourées, les hétérocycles pentatomiques ou hexatomiques où 1, 2 ou 3 atomes d'azote sont présents, comme la pyridine, le pyrrole, l'imidazol, le benzimidazole, le thiazole, le pyrazole, la pyridazine, la quinazoline, l'oxadiazine, la triazine ; la dinitroaniline, les dérivés de chloro-acétamide et les diphényléthers.

**9.** Procédé selon la revendication 8, dans lequel les substances actives sont : (1) les pyréthroïdes choisis parmi l'alléthrine, la bioalléthrine, la tétraméthrine, la pralléthrine, la cyperméthrine, la β-cyperméthrine, la ζ-cyperméthrine, l'esbiothrine, la perméthrine, la fenproprathrine, la transfluthrine, la bifenthrine, la resméthrine, la bioresméthrine, le fenvalérate, l'esfenvalérate, la tétraméthrine, l'imiprothrine, la phénothrine, la β-cyfluthrine, la deltaméthrine, la cyhalothrine, l'étofenprox, le silafluofène, les extraits de pyrèthre et leurs mélanges, etc. (2) les néonicotinoïdes choisis parmi l'imidacloprid, l'acétamiprid, le thiacloprid, le thiaméthoxam et l'AKD1022 ; (3) les carbamates, choisis par exemple parmi le pyrimicarb, l'aldicarb, le thiodicarb, le carbofurane, le carbosulfane et le propoxur ; (4) les organophosphates choisis parmi le profenofos, le diméthoate, l'ométhoate, le terbufos, l'azinphos-méthyl, le déméton-s-méthyl, le piriminphosméthyl, le fénitrothion, le trichlorfon et le malathion ; (5) les inhibiteurs des porteurs électroniques des mitochondries (« METI ») choisis parmi la fénazaquine, le tébufenpyrad, le fenpyroximate, le pyridabène et le tolfenpyrad ; (6) les fongicides choisis parmi le fludioxonil et le pyriméthanyl ; (7) les antihelminthiques choisis parmi le mébendazole, le métronidazole, le fenbendazole, le thiabendazole, le clotrimazole et le praziquantel ; (8) les inhibiteurs de transmission nerveuse choisis parmi l'indoxacarbe et le fipronil ; (9) d'autres substances actives choisies parmi la pymétrozine, le chlorfenapyr, le pyridalyle ; (10) les herbicides choisis parmi les dinitroanilines, de préférence la pendiméthaline et la trifluraline ; les dérivés de chloroacétamide, de préférence l'alachlore, l'acétochlore, le diméténamide, le métolachlore, le péthoxamide, le prétilachlore ; les carbamates, de préférence le molinate, le triallate, l'EPTC ; les diphényléthers, de préférence, l'oxyfluorfène ; la flurochloridone, la clomazone, le dichlobénil.

**10.** Procédé selon la revendication 9, dans lequel les substances actives sont : l'alléthrine, la bioalléthrine, la tétraméthrine, la pralléthrine, les cyperméthrines, l'esbiothrine, la perméthrine, la fenproprathrine, la transfluthrine, la bifenthrine, la resméthrine, la bioresméthrine, le fenvalérate, l'esfenvalérate, l'étofenprox, l'imiprothrine, la phénothrine, la β-cyfluthrine, la deltaméthrine, la cyhalothrine, l'imidaclopride, l'acétamipride, le thiaclopride, le thiodicarbe, le carbosulfane, le carbofurane, la fénazaquine, le pyridabène, le fludioxonile, le pyriméthanyle, le fenbendazole, le clotrimazole, le praziquantel, le fipronil, la pymétrozine et le pyridalyl.

**11.** Procédé selon les revendications 1 à 10, dans lequel en plus des substances actives, la microcapsule peut contenir des agents synergiques des substances actives contenant au moins un cycle aromatique carbocyclique ou des dérivés phosphoriques.

**12.** Procédé selon la revendication 11, dans lequel les agents synergiques sont choisis parmi le pipéronylbutoxyde (PBO) et ses analogues, le sésamol, la verbutine, le MGK 264, le DEF, de préférence le PBO et ses analogues, la verbutine, de préférence le PBO.

**13.** Procédé selon les revendications 1 à 12, dans lequel la microcapsule peut contenir des solvants choisis parmi :

- les alkylbenzènes en $C_9$ à $C_{20}$, de préférence en $C_{10}$ à $C_{16}$, et leurs mélanges, dans lesquels l'alkyle est linéaire ou ramifié, quand cela est possible, de préférence, le Solvesso® 150, le Solvesso® 200, le Solvesso®

150 ND, le Solvesso® 200 ND, de manière davantage préférée exempts de résidus de naphtalène ;
- les esters d'alkyle en $C_1$ à $C_4$ d'acides bicarboxyliques en $C_3$ à $C_{14}$, de préférence le glutarate de diméthyle, le succinate de diméthyle, l'adipate de diméthyle, le sébacate de diméthyle ou leurs mélanges, de manière davantage préférée, le DBE ;
- les esters d'alkyle en $C_3$ à $C_{14}$ d'acides carboxyliques ou hydroxyacides en $C_3$ à $C_{14}$, de préférence, le Purasolv® EHL et le myristate d'isopropyle ;
- les esters de méthyle d'acide gras en $C_{12}$ à $C_{22}$ saturés ou insaturés ou leurs mélanges, de préférence l'acide oléique et l'acide linoléique ou leurs mélanges, de préférence, un biodiesel ;
- les esters d'alkyle en $C_7$ à $C_9$ de l'acide acétique, de préférence l'acétate d'heptyle.

14. Procédé selon les revendications 1 à 13, dans lequel les formulations A) contiennent, en plus des microcapsules, d'autres composants choisis parmi les dispersants, les épaississants, un antimousse, un antigel, les agents antifongiques et les modificateurs d'activité.

15. Procédé selon la revendication 14, dans lequel les modificateurs d'activité sont choisis parmi : un « phytoprotecteur » (antidote), de préférence le furylazole, le cloquintocet-mexyl ; les agents de synergie, de préférence le PBO ; les phéromones sexuelles et les kairomones.

16. Procédé selon les revendications 1 à 15, dans lequel les formulations A) contiennent un agent synergique à l'intérieur de la microcapsule, de préférence le PBO.

17. Procédé selon la revendication 16, dans lequel les formulations A) contiennent du PBO hors de la microcapsule.

18. Procédé selon les revendications 1 à 17, dans lequel l'émulsion ou le liquide émulsifiable comprenant du PBO comprend des tensioactifs non ioniques ou des tensioactifs non ioniques en mélange avec des tensioactifs anioniques.

19. Procédé selon les revendications 1 à 18, dans lequel la coque de la microcapsule est formée par une membrane polymère insoluble dans l'eau pouvant être obtenue par une polymérisation interfaciale *in situ*, les polymères étant choisis parmi les polyamides, les polyesters, les polyuréthanes-urées, les polyurées.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 617890 A
- WO 2003092378 A
- EP 183999 A
- WO 03051116 A
- US 20030119675 A
- EP 322820 A
- WO 2006111553 A
- WO 2007039055 A

### Non-patent literature cited in the description

- **GUNNING R.V. et al.** PiperonylButoxide. Academic Press, 1998, 215-225
- **BENCHAOUI H.A. et al.** *J.Pharmacol.,* 1996, vol. 48, 753-759
- **WEN Z. et al.** *Pest. Science,* 1997, vol. 49, 367-371
- **ZHAO J.Z.** *J. Econ. Entomol.,* 2000, vol. 93, 1508-1514
- **NISHIWAKI H. et al.** *J. Pest. Science,* 2004, vol. 29, 110-116
- **GIMENO M.** *J. Environ. Sci. Health,* 1996, vol. B31 (3), 407-420
- **FINCH C.A.** Encapsulation and controlled release. Royal Society of Chemistry, 1993, vol. 138, I-12
- **CAHILL, M. et al.** *Bull. Entomol. Res.,* 1995, vol. 85, 181-187
- Laboratory apparatus for applying direct sprays and residual films. *The Annual of Applied Biology,* 01 March 1952, vol. 39 (1